# EUROPEAN PATENT APPLICATION

(11) **EP 4 083 550 A1**
(43) Date of publication of application: **02.11.2022**
(21) Application number: 20908111.6
(22) Date of filing: 16.12.2020
(51) Int. Cl.: F25D 23/12

(54) **EDIBLE MEAT AGING MODULE AND REFRIGERATOR**

(30) Priority: 25.12.2019 JP 2019234000
(71) Applicant: Qingdao Haier Refrigerator Co., Ltd, Qingdao, Shandong 266101 (CN); Haier Smart Home Co., Ltd., Qingdao, Shandong 266101 (CN); Aqua Co., Ltd, Chuou-Ku Tokyo 103-0012 (JP)
(72) Inventor: HOSHINO, Hitoshi, Tokyo 103--0012 (JP)
(74) Representative: Lavoix
(86) International application number: PCT/CN2020/136799
(87) International publication number: WO 2021/129482

(57) **Abstract**

The present invention provides an edible meat curing module which may prevent meat from spoiling and reduce a loss rate, and a refrigerator. The edible meat curing module (10) of the present invention is arranged within a refrigerating chamber (22) of a refrigerator (11) comprising a refrigeration cycle system (12), and is configured to cure meat (35). The edible meat curing module (10) comprises: a case (13) arranged in an interior of the refrigerating chamber (22); an internal blower (14) for blowing air into an interior of the case (13); and a damper (15) for sucking the air cooled by the refrigeration cycle system (12) into the interior of the case (13).

## Description

### TECHNICAL FIELD

The present invention relates to an edible meat curing module and a refrigerator, and more particularly to an edible meat curing module capable of effectively curing meat, and a refrigerator.

### BACKGROUND

Conventionally, a meat curing device in Patent Document 1 is well known. The meat curing device described in Patent Document 1 is arranged within a separate space of a household refrigerator in order to shorten the time and realize a minimum number of scraps. Furthermore, temperature and humidity in the interior of the meat curing device is maintained within a predetermined range, and a predetermined volume of air is blown to the meat therein. According to the content of Patent Document 1, the time required for curing meat in this way may be shortened and the edible portion of the meat may be increased.

[Patent Document 1]: JP2019013193.

### SUMMARY

### [Problem to be Solved by the Present Invention]

However, there is still room for improvement in the above-mentioned meat curing device from the viewpoint of improving the efficiency of curing meat.

Bacteria are mainly attached to the surface of the meat. In the curing device of the prior art, the more the meat to be cured, the less the humidity in the interior of the curing device may be reduced sufficiently. As the drying is insufficient, and the time required for curing is long, and there is a risk of the meat to spoil. Furthermore, if the humidity is too low during curing and the meat is dried continuously, the edible portion of the meat will be reduced, and the loss rate of the meat will be increased.

The present invention has been made in view of the above-mentioned circumstances, and an object thereof is to provide an edible meat curing module capable of preventing the meat from spoiling and reducing a loss rate, and a refrigerator.

### [Means to Solve the Problem]

The edible meat curing module of the present invention is configured to cure meat, is arranged within a storage chamber of a refrigerator including a refrigeration cycle system, and includes: a case arranged within an interior of the storage chamber; an internal blower for blowing air into an interior of the case; and a damper for sucking the air cooled by the refrigeration cycle system into the interior of the case.

Furthermore, in the edible meat curing module of the present invention, the damper is opened and closed in synchronization with a compressor of the refrigeration cycle system until the time for curing meat reaches a first setting time.

Furthermore, in the edible meat curing module of the present invention, during curing of the meat, the internal blower keeps operating to circulate air in the interior of the case.

Furthermore, the refrigerator of the present invention includes the edible meat curing module.

### [Effects of the Present Invention]

The edible meat curing module of the present invention is configured to cure meat, is arranged within a storage chamber of a refrigerator including a refrigeration cycle system, and includes: a case arranged within an interior of the storage chamber; an internal blower for blowing air into an interior of the case; and a damper for sucking the air cooled by the refrigeration cycle system into the interior of the case. Thus, the edible meat curing module according to the present invention may prevent meat from spoiling and reduce a loss rate. Furthermore, since the present invention includes a damper, the amount of cooled air flowing into the interior of the case may be adjusted. Thus, the edible meat curing module of the present invention can effectively dry a surface of the meat, thereby preventing the meat from spoiling and reducing the loss rate.

In addition, in the edible meat curing module of the present invention, the damper is opened and closed in synchronization with the compressor of the refrigeration cycle system until the time for curing meat reaches the first setting time. Thus, with respect to the edible meat curing module according to the present invention, the air cooled and dried by an evaporator of the refrigeration cycle system may be sucked into the interior of the case through the damper, so that the surface of the meat may be effectively dried.

In addition, in the edible meat curing module of the present invention, during curing of the meat, the internal blower keeps operating to circulate air in the interior of the case. Thus, with the edible meat curing module according to the present invention, the internal blower continuously operates so that the moisture oozing from the surface of the meat may be removed, thereby preventing the meat from spoiling.

In addition, the refrigerator of the present invention includes the edible meat curing module. Thus, with the refrigerator according to the present invention, the meat may be efficiently cured in the interior of the storage chamber.

### BRIEF DESCRIPTION OF THE DRAWINGS

Fig. 1 is a side sectional view of a refrigerator and an edible meat curing module according to an embodiment of the present invention, showing a case in which air is introduced into an interior of the edible meat curing module;
Fig. 2 is a side sectional view of a refrigerator and an edible meat curing module according to an embodiment of the present invention, showing a case in which air is not introduced into an interior of the edible meat curing module;
Fig. 3 is a block diagram showing a connection configuration of a refrigerator and an edible meat curing module according to an embodiment of the present invention; and
Fig. 4 is a timing chart showing an operation method of a refrigerator and an edible meat curing module according to an embodiment of the present invention.

### DETAILED DESCRIPTION

Hereinafter, an edible meat curing module 10 and a refrigerator 11 according to an embodiment of the present invention will be described in detail based on the drawings. In the following description, the same components are in principle denoted by the same reference numerals, and thus repeated descriptions thereof will be omitted.

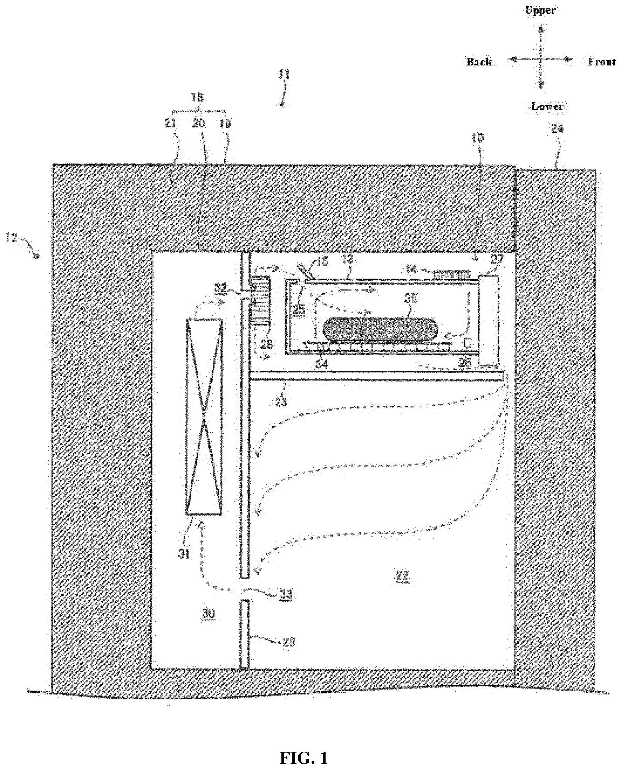

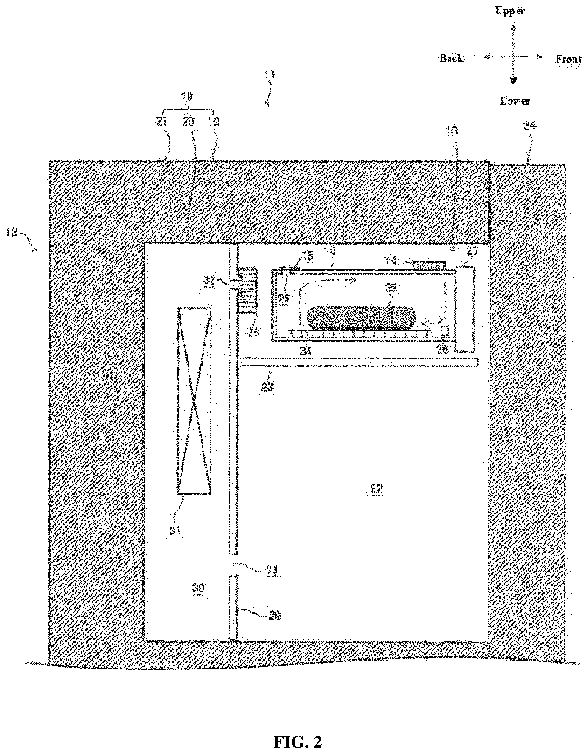

Fig. 1 is a side sectional view of a refrigerator 11 including an edible meat curing module 10. In this figure, an air flow in a refrigerating chamber 22 and a cooling chamber 30 is indicated by a broken line arrow, and an air flow in an interior of the edible meat curing module 10 is indicated by a dotted line. The foregoing description applies equally to Fig. 2.

Firstly, a structure of the refrigerator 11 is described. The refrigerator 11 mainly includes a heat insulating cabinet 18, a refrigerating chamber 22, a heat insulating door 24 for closing the refrigerating chamber 22 from the front, and a refrigeration cycle system 12 for cooling the refrigerating chamber 22, wherein the refrigerating chamber is a storage chamber formed in an interior of the heat insulating cabinet 18.

The heat insulating cabinet 18 includes a housing 19, a liner 20, and a heat insulating material 21 which thus form an outer contour of the refrigerator 11. The housing 19 is formed of a generally cabinet-shaped steel plate. The liner 20 is arranged at an interval inside the housing 19, is formed of a generally cabinet-shaped synthetic resin plate, and is open at a front side thereof. The heat insulating material 21 is formed of polyurethane foam or the like, and the foam is filled between the liner 20 and the housing 19. The refrigerating chamber 22 is formed in an interior of the liner 20.

The heat insulating door 24 is configured to close a front side opening of the heat insulating cabinet 18, and is rotatable relative to the heat insulating cabinet 18. The heat insulating door 24 has a heat insulating structure similar to that of the heat insulating cabinet 18.

The refrigeration cycle system 12 includes a compressor 17 to be described later, a condenser which is not shown in the drawings, an expansion device which is not shown in the drawings, and an evaporator 31. In an interior of the cooling chamber 30, the air is cooled and dried by the evaporator 31, and then is sent to the refrigerating chamber 22. The temperature in the refrigerating chamber 22 is set to, for example, 2°C to 5°C, and the temperature in the edible meat curing module 10 is also the same.

A cooling chamber 30 separated by a partition 29 is formed behind the refrigerating chamber 22. The above-mentioned evaporator 31 is arranged in the interior of the cooling chamber 30. An air blowing port 32 and an air return port 33 are formed in the partition 29, the air blowing port 32 is configured to blow the air cooled by the evaporator 31 to the refrigerating chamber 22, and the air return port 33 is configured to return the air that has cooled the refrigerating chamber 22 back to the cooling chamber 30.

A refrigerating chamber blower 28 is mounted in the vicinity of the air blowing port 32. The refrigerating chamber blower 28 is a centrifugal fan or an axial fan, which blows the air cooled by the evaporator 31 in the cooling chamber 30 toward the refrigerating chamber 22.

The refrigerating chamber 22 is divided by a dividing shelf 23, and the edible meat curing module 10 is mounted above the dividing shelf 23. In this embodiment, the edible meat curing module 10 is one of the components of the refrigerator 11, but the edible meat curing module 10 may also be provided as a separate device.

The refrigerator 11 firstly operates the refrigeration cycle system 12 to cool the air in the cooling chamber 30 by the evaporator 31. The refrigerating chamber blower 28 blows the air cooled by the evaporator 31 in the cooling chamber 30 toward the refrigerating chamber 22 via the air blowing port 32. The air that has cooled an interior of the refrigerating chamber 22 is returned back to the cooling chamber 30 via the air return port 33. In this way, the interior of the refrigerating chamber 22 is cooled to a predetermined refrigerating temperature range. The refrigeration cycle system 12 operates intermittently to ensure that the temperature in the refrigerating chamber 22 is within the predetermined refrigerating temperature range. Furthermore, after the refrigerating cycle system 12 operates continuously for a period of time, thick frost will occur on the evaporator 31, and at this point, a defrosting process needs to be performed by a defrosting heater which is not shown in the drawings.

The edible meat curing module 10 mainly includes a case 13, an internal blower 14, a damper 15, a module door 27, a carrying table 34, and a discharge port 26. The edible meat curing module 10 cures and dries meat 35 so as improve a flavor and texture of the meat 35.

The case 13 is molded to be case-shaped from a metal plate such as stainless steel, and is open at a front side thereof. When the case 13 is made of a metal plate with excellent thermal conductivity, the cold air in the refrigerating chamber 22 and an inner space of the case 13 may exchange heat with each other through the case 13, so that an interior of the case 13 may be cooled to a refrigerating temperature range suitable for the meat 35 to be cured.

The internal blower 14 is an axial fan or a centrifugal fan mounted on the case 13, and has a function of circulating air in the interior of the case 13. During curing of the meat 35, the internal blower 14 operates substantially continuously. The internal blower 14 circulates air in the interior of the case 13, so that the meat juice oozing from the surface of the meat 35 is dried, thereby preventing the meat 35 from spoiling.

The damper 15 is a cold air suction mechanism for sucking cold air into the case 13, and is configured to adjust an inflow of the air cooled and dried by the evaporator 31 into the interior of the edible meat curing module 10. Here, opening and closing of the damper 15 is controlled by a control unit 16 which is not shown in the drawings. Furthermore, a suction port 25 is further formed on the case 13, and the suction port 25 is opened when the damper 15 is opened, and the suction port 25 is closed when the damper 15 is closed.

The damper 15 is arranged in the vicinity of the refrigerating chamber blower 28. Furthermore, after the damper 15 is opened, the closer the damper 15 is to the refrigerating chamber blower 28, the more the damper 15 inclines upward. By providing the damper 15 with such a structure, the air blown out from the refrigerating chamber blower 28 hits an inclined surface of the damper 15 and is directed, and thus is sucked into the interior of the case 13 well.

The module door 27 is configured to close a front side opening of the case 13 and is rotatable relative to the case 13. A user opens or closes the module door 27 to pick or place the meat 35. A transparent plate such as glass may be embedded on the module door 27 so that the state of the meat 35 may be easily seen from the outside.

The carrying table 34 is a mesh table, and is arranged on a bottom side of the case 13. The meat 35 is carried on an upper surface of the carrying table 34. When the meat 35 is carried on the upper surface of the carrying table 34, a lower surface of the meat 35 may also contact the cold air, and the moisture on the lower surface of the meat 35 drips downward, so that the meat juice may be prevented from staying on the lower surface to cause spoilage of the meat.

The discharge port 26 is formed by partially opening the case 13, and is configured to communicate the interior of the case 13 with the refrigerating chamber 22. By forming the discharge port 26, the air sucked from the suction port 25 and used to dry and cool the meat 35 escapes from the discharge port 26 to the refrigerating chamber 22. Thus, the moisture generated from the meat 35 may be prevented from staying in the interior of the case 13.

The meat 35 may be any meat that the user desires to be cured and dried, such as beef, pork, chicken, and the like.

The air flow when the damper 15 is opened is as follows. Firstly, the refrigeration cycle system 12 operates, and the air in the cooling chamber 30 is cooled and dried by the evaporator 31. The cooled and dried air is blown toward the refrigerating chamber 22 via the air blowing port 32 by the refrigerating chamber blower 28. A part of the cold air blown out by the refrigerating chamber blower 28 enters the interior of the case 13 via the damper 15 and the suction port 25. At this point, the air in the interior of the case 13 is circulated by the internal blower 14. The meat 35 is cooled by the introduced air, and the surface thereof becomes dry. Thereafter, the air that has cooled and dried the meat 35 moves toward the refrigerating chamber 22 via the discharge port 26.

Fig. 2 is a side sectional view showing operations of the edible meat curing module 10 and the refrigerator 11 when the damper 15 is closed. Here, the damper 15 is in a closed state in which the suction port 25 is closed. Furthermore, since the temperature in the refrigerating chamber 22 is lower than a predetermined temperature, the refrigeration cycle system 12 and the refrigerating chamber blower 28 stop operating. On the other hand, the internal blower 14 of the edible meat curing module 10 operates continuously to circulate the air in the interior of the case 13. Thus, the meat 35 is prevented from being excessively dried, and the moisture oozing from the surface of the meat 35 is dried, thereby preventing the meat 35 from spoiling.

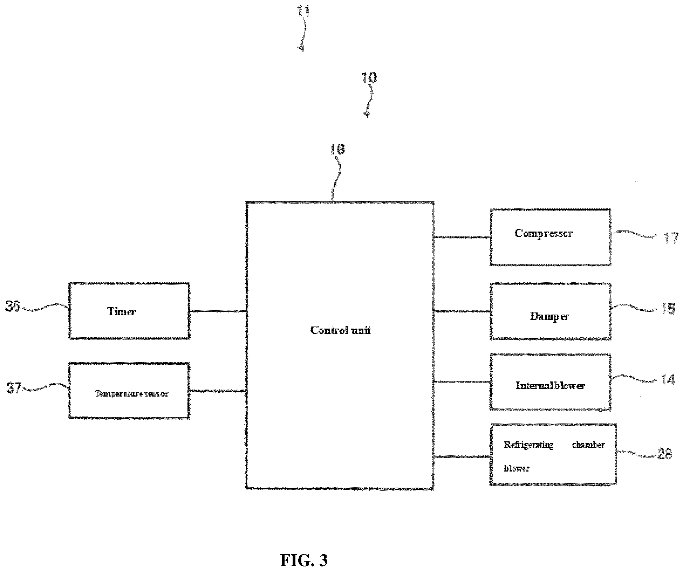

Fig. 3 is a block diagram showing a connection configuration of an edible meat curing module 10 and a refrigerator 11.

The control unit 16 is an arithmetic control element including a CPU, a RAM, a ROM, and the like.

A timer 36 and a temperature sensor 37 are connected to an input terminal of the control unit 16. The timer 36 is configured to measure the time of the edible meat curing module 10 and various components included in the refrigerator 11, such as the operation time and the stop time of the compressor 17 of the refrigeration cycle system 12, the refrigerating chamber blower 28, the damper 15, and the internal blower 14, etc. The temperature sensor 37 is configured to measure the temperature in the interior of the refrigerating chamber 22 and the temperature in the interior of the case 13.

The compressor 17, the damper 15, the internal blower 14, and the refrigerating chamber blower 28 are connected to an output terminal of the control unit 16. The compressor 17 is configured to compress a refrigerant used in the refrigeration cycle system 12. The configurations and operations of the damper 15, the internal blower 14, and the refrigerating chamber blower 28 are as described with reference to Fig. 1.

The control unit 16 executes a predetermined arithmetic processing based on input information inputted from the timer 36 and the temperature sensor 37, and controls the operating and opening and closing of the compressor 17, the damper 15, the internal blower 14, and the refrigerating chamber blower 28 based on the arithmetic processing.

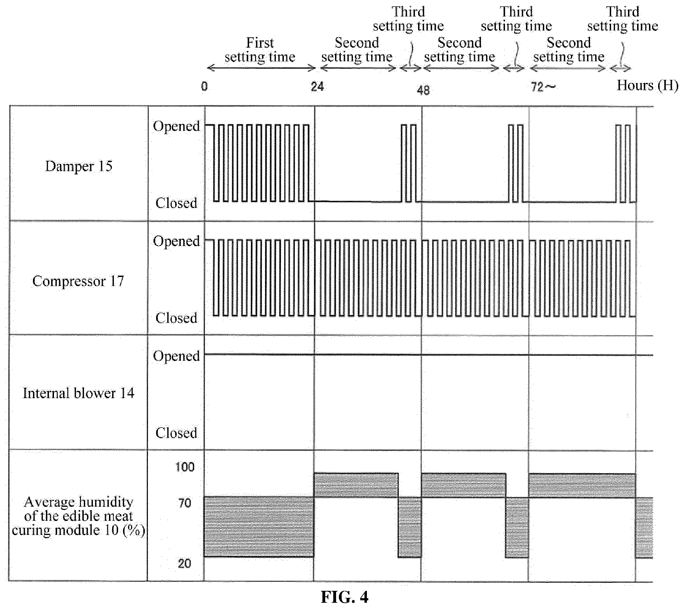

Referring to the timing chart of Fig. 4, the operations of the edible meat curing module 10 and the refrigerator 11 having the above-described configuration will be described below.

The control unit 16 controls the damper 15 to be opened or closed in synchronization with the compressor 17 of the refrigeration cycle system 12 until a first setting time measured by the timer 36 elapses. Here, for example, the first setting time is set to 24 hours. That is, the control unit 16 opens the damper 15 during operation of the compressor 17, and closes the damper 15 during stop of the compressor 17. Here, based on the control of the control unit 16, the refrigerating chamber blower 28 shown in Fig. 1 rotates when the compressor 17 operates, and the refrigerating chamber blower 28 shown in Fig. 1 also stops when the compressor 17 stops. In addition, the internal blower 14 operates continuously for the entire setting time in principle, and circulates the air within the edible meat curing module 10 by agitating.

As shown in Fig. 1, based on the control of the control unit 16, the damper 15 is opened when the compressor 17 operates, the air cooled and dried by the evaporator 31 is sent via the damper 15 and the suction port 25 into the case 13 by means of a blowing force of the refrigerating chamber blower 28. Thus, the surface of the meat 35 is dried reliably. The air containing moisture due to drying the meat 35 flows via the discharge port 26 toward the refrigerating chamber 22, and returns via the air return port 33 back to the cooling chamber 30. In this way, the air cooled and dried by the evaporator 31 may be blown to the meat 35 so as to accelerate the drying of the surface of the meat 35.

As shown in Fig. 2, based on the control of the control unit 16, the damper 15 is closed when the compressor 17 stops, and the refrigerating chamber blower 28 also stops. During this period, the internal blower 14 continues to operate to circulate the air in the interior of the case 13. Thus, the moisture oozing from the surface of the meat 35 may be removed, thereby preventing the surface of the meat 35 partially from spoiling.

During the first setting time, an average humidity in the interior of the edible meat curing module 10 is, for example, 70%, which allows the meat 35 to be properly cured.

When the elapsed time measured by the timer 36 reaches the first setting time, the control unit 16 maintains the closed state of the damper 15 until a second setting time elapses. Here, for example, the second setting time is set to 23 hours. That is, since the control unit 16 controls the opening or closing of the compressor 17 so that the temperature of the refrigerating chamber 22 is within a predetermined refrigeration temperature range, the damper 15 is maintained in a closed state. Thus, the meat 35 may be prevented from being excessively dried, and the meat 35 may be cured in a state in which the meat 35 has moisture in the interior thereof. Furthermore, during the second setting time, the control unit 16 controls the continues operation of the internal blower 14 to circulate the air in the interior of the case 13, thereby removing the moisture on the surface of the meat 35. During the second setting time, the damper 15 is closed, and thus the average humidity of the edible meat curing module 10 is 100%, which can prevent the meat 35 from being excessively dried.

After the second setting time measured by the timer 36 elapses, the control unit 16 controls the synchronous opening or closing of the damper 15 and the compressor 17 until a third setting time elapses. Here, for example, the third setting time is set to 1 hour. The operations of the damper 15 and the compressor 17 during the third setting time are similar to those of the damper 15 and the compressor 17 during the first setting time. In this way, the moisture in the interior of the edible meat curing module 10 may be released to the refrigerating chamber 22. Thus, the surface of the meat 35 may be properly dried. An opening or closing operation of the damper 15 is executed during the third setting time, and thus the average humidity of the edible meat curing module 10 is maintained at 70%.

Thereafter, the control unit 16 repeats the operations during the second setting time and the third setting time. Specifically, the control unit 16 keeps the damper 15 closed for 23 hours, and then opens or closes the damper 15 in synchronization with the opening or closing of the compressor 17 for 1 hour.

The control unit 16 repeats the control operations during the second setting time and the third setting time for 20 days, for example. Thus, the interior of the meat 35 may be cured while the meat 35 is prevented from spoiling, thereby improving the flavor and texture of the meat 35.

The present invention is not limited to the above-described embodiments, and various modifications may be implemented without departing from the gist of the present invention. Furthermore, each of the above-described embodiments may be combined with each other.

For example, referring to Fig. 1, the damper 15 is used as a cold air suction mechanism for sucking air into the edible meat curing module 10, but a fan may also be used as the cold air suction mechanism.

### [List of Reference Numerals:]

- 10: Edible meat curing module;
- 11: Refrigerator;
- 12: Refrigeration cycle system;
- 13: Case;
- 14: Internal blower;
- 15: Damper;
- 16: Control unit;
- 17: Compressor;
- 18: Heat insulating cabinet;
- 19: Housing;
- 20: Liner;
- 21: Heat insulating material;
- 22: Refrigerating chamber;
- 23: Dividing shelf;
- 24: Heat insulating door;
- 25: Suction port;
- 26: Discharge port;
- 27: Module door;
- 28: Refrigerating chamber blower;
- 29: Partition;
- 30: Cooling chamber;
- 31: Evaporator;
- 32: Air blowing port;
- 33: Air return port;
- 34: Carrying table;
- 35: Meat;
- 36: Timer;
- 37: Temperature sensor.

## Claims

1. An edible meat curing module, configured to cure meat, arranged within a storage chamber of a refrigerator comprising a refrigeration cycle system, and **characterized by** comprising:
a case arranged within an interior of the storage chamber;
an internal blower for blowing air into an interior of the case; and
a damper for sucking air cooled by the refrigeration cycle system into the interior of the case.

2. The edible meat curing module according to claim 1, **characterized in that**,
the damper is opened and closed in synchronization with a compressor of the refrigeration cycle system until the time for curing the meat reaches a first setting time.

3. The edible meat curing module according to claim 2, **characterized in that**,
during curing of the meat, the internal blower keeps operating and circulates air in the interior of the case.

4. A refrigerator, **characterized by** comprising the edible meat curing module according to any of claims 1 to 3.
